Europäisches Patentamt

European Patent Office

Office européen des brevets

(19)

(11) Numéro de publication: **0 027 416**
**B1**

(12) **FASCICULE DE BREVET EUROPEEN**

(45) Date de publication du fascicule du brevet: **15.02.84**

(51) Int. Cl.³: **B 60 N 1/06, A 47 C 5/12**

(21) Numéro de dépôt: **80401447.0**

(22) Date de dépôt: **09.10.80**

(54) **Siège moulé à dossier articulé, notamment pour automobiles.**

(30) Priorité: **11.10.79 FR 7925304**

(43) Date de publication de la demande:
**22.04.81 Bulletin 81/16**

(45) Mention de la délivrance du brevet:
**15.02.84 Bulletin 84/7**

(84) Etats contractants désignés:
**BE DE FR GB IT LU NL SE**

(56) Documents cités:
**FR - A - 1 457 894**
**FR - A - 2 186 904**
**FR - A - 2 277 550**
**FR - A - 2 418 639**
**US - A - 3 744 843**
**US - A - 4 065 182**
**US - A - 4 169 626**

(73) Titulaire: **HUTCHINSON-MAPA**
**2, rue Balzac**
**F-75008 Paris (FR)**

(72) Inventeur: **Casse, Christian**
**58, Rue Corvisart**
**F-75013 Paris (FR)**
Inventeur: **Joly, Robert**
**Route du Moulin**
**F-72350 Puille S/Vegre (Brulon) (FR)**

(74) Mandataire: **Ores, Irène et al,**
**CABINET ORES 6, Avenue de Messine**
**F-75008 - Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Siège moulé à dossier articulé, notamment pour automobiles

La présente invention est relative à de nouveaux sièges à dossier articulé, notamment pour automobiles.

Les sièges à dossier articulé notamment pour automobiles, sont bien connus dans l'Art antérieur. Ils comportent généralement une armature pour le dossier, constituée, par exemple par un tube en U et une armature pour l'assise, également constituée par un tube. En variante, l'armature du dossier et celle de l'assise peuvent être constituées par une combinaison de tubes et de tôles estampées, soudés les uns aux autres, ou par des baquets en tôle emboutie renforcés par des tubes, ou encore par deux coques, une pour le dossier et une pour l'assise, réalisées séparément en matière plastique renforcée par un mat de verre et obtenues par moulage par compression.

L'articulation du dossier par rapport à l'assise est réalisée à l'aide d'une articulation métallique qui est fabriquée séparément et qui est rapportée sur les deux armatures du siège, par soudure ou par fixation par d'autres moyens tels que boulonnage ou analogue.

Le Brevet US—A—4 169 626 décrit un siège de véhicule à dossier articulé, dans lequel le dossier est articulé à l'assise par des axes d'articulation qui tourillonnent par rapport aux parois latérales de la partie arrière de l'assise, le système d'articulation étant placé en partie entre deux parois de l'assise et comprenant un logement qui reçoit un grain débrayable, lequel s'engrène sur la base du dossier par l'intermédiaire d'un secteur denté pratiqué dans une pièce intermédiaire elle même solidaire du dossier.

Ces éléments font partie d'une articulation supérieure qui comporte un nombre important de pièces et qui est elle-même associée à une articulation inférieure qui comporte également plusieurs pièces.

Le système d'articulation selon ce Brevet américain, est extrêment complexe en ce qu'il comporte un nombre de pièces relativement élevé, les difficultés de fabrication de cette multiplicité de pièces dans des limites de tolérance étroites, la nécessité de l'assemblage de ces pièces, qui requiert beaucoup de temps et l'intervention d'une main-d'oeuvre importante, grevant ainsi considérablement le prix de revient de ces systèmes d'articulation.

Il a par ailleurs été proposé par le Brevet FR—A—2 227 550, de pourvoir un dossier de siège inclinable d'un dispositif de verrouillage à commande par levier par lequel un grain, guidé par rapport à l'assise, est appliqué contre un secteur denté solidaire du dossier, au moyen d'un ergot qui se déplace dans une lumière. Toutefois, selon ce Brevet, l'organe de verrouillage denté est appliqué contre le secteur denté par un organe élastique, le mouvement du secteur denté étant un mouvement rectiligne alternatif guidé par une coulisse fixée sur l'armature métallique de l'assise du siège. L'organe de verrouillage est donc un organe coulissant et c'est dans ce dernier qu'est percée la lumière traversée d'un ergot, lui-même monté sur une biellette fixée à un arbre qui tourillonne dans une pièce solidaire de l'armature de l'assise du siège, qui porte l'organe de verrouillage.

Outre que ce dispositif est relativement compliqué et et qu'il est visible, de même d'ailleurs que le dispositif du brevet US décrit plus haut, il présente en outre l'inconvénient d'être associé à un siège à armature métallique qui requiert une structure supplémentaire pour supporter les coussins de garniture de ces sièces.

Il a par ailleurs été proposé de réaliser des sièges constitués par des coques monobloc comprenant une assise et un dossier, réalisées en résine thermoplastique ou thermodurcissable et fixées au plancher du véhicule. Si de tels sièges sont relativement faciles à fabriquer, plus légers et moins coûnteux que les sièges à système d'articulation précédemment décrits, ils présentent cependant l'incovénient majeur de supprimer toute possibilité d'articulation et de réglage du dossier par rapport à l'assise du siège, nuisant ainsi considérablement au confort du voyageur et constituant une infraction aux règlements en vigueur dans certains pays qui exigent la mise en place dans les automobiles, de sièges à dossier d'inclinaison réglable.

La présente invention s'est donné pour but de pourvoir à un nouveau siège à dossier articulé, notamment pour automobiles, qui répond mieux aux nécessités de la pratique que les sièges à dossier articulé proposés dans l'Art antérieur, notamment en ce que les sièges conformes à la présente invention sont réalisés par moulage par injection, en matière plastique de faible densité, légère, présentant une résistance mécanique élevée, peu coûteuse, en ce que leur dossier est articulé par rapport à l'assise au moyen d'un système d'articulation intégré à l'assise, ne comportant pas de pièce rapportée, et invisible de l'extérieur, ce qui procure l'avantage supplémentaire de ne pas nécessiter d'habillage de la zone d'articulation, contrairement aux sièges à dossier articulé proposés dans l'Art antérieur, dans lesquels le mécanisme d'articulation, visible et inesthétique, doit impérativement être caché par un habillage approprié. De plus, la réalisation des sièges conformes à la présente invention par moulage par injection permet de leur conférer des formes complexes aptes à répondre aux exigences de confort et d'esthétique les plus variées. En outre, l'utilisation de matière plastique et de la technique du moulage par injection permet de pourvoir l'assise du siège, de moyens d'ancrage venus de moulage avec l'assise, pour la fixation au plancher du véhicule.

Par rapport au brevet US—A—4 169 626 qui décrit déjà un siège à dossier articulé, notamment pour automobiles, comprenant une assise en matière thermoplastique moulée par injection, un dossier pourvu d'au moins un axe d'articulation à l'assise monté dans les parois latérales de la partie arrière de l'assise et un système d'articulation qui comprend un secteur denté qui s'engrène avec un grain débrayable pour bloquer le dossier règlable en position, des moyens de fixation dudit siège à la structure du véhicule étant également prévus, le siège selon la présente invention est caractérisé en ce que ledit système d'articulation intégré à l'assise est complètement dissimulé vis-à-vis de l'extérieur, ladite assise comportant à sa partie arrière des parois latérales surélevées par rapport au reste de l'assise, quie enveloppent complètement la base du dossier ainsi que le secteur denté solidaire de la dite base du dossier, en ce que le grain débrayable qui est logé dans un logement venu de moulage, ménagé par insulage dans un paroi latérale de l'assise et en ce que l'axe d'articulation est reçu dans des orifices ménagés par moulage dans au moins l'une desdites parois latérales.

D'autres caractéristiques de l'invention font l'objet des revendications 2 à 9.

L'invention sera mieux comprise à l'aide du complèment de description qui va suivre, qui se réfère aux dessins annexés, dans lesquels:

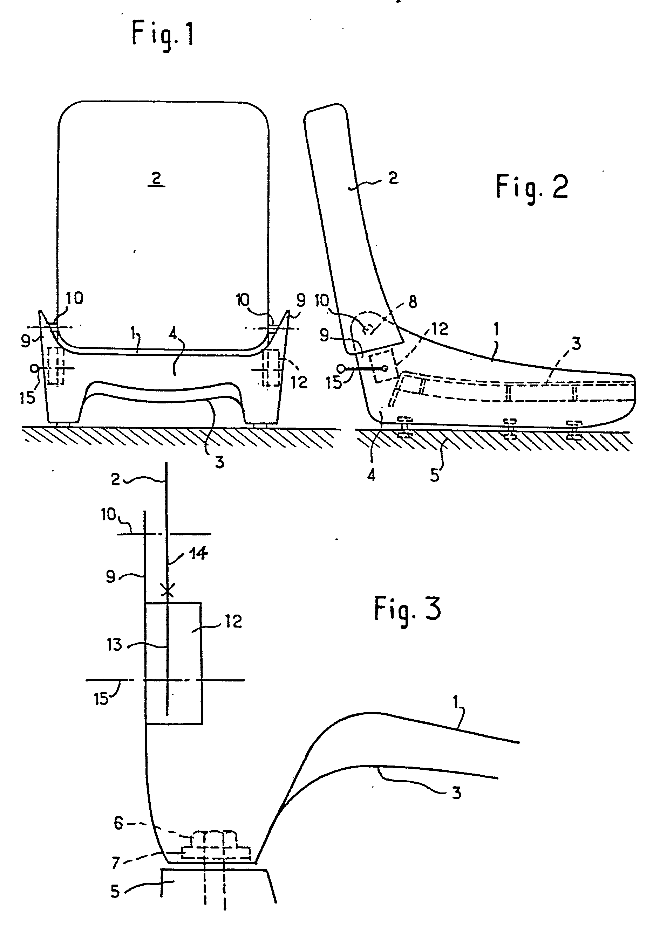

— la figure 1 est une vue schématique arrière d'un siège à dossier articulé conforme à la présente invention;

— la figure 2 est une vue schématique latérale du siège de la figure 1;

— la figure 3 est une vue schématique partielle en coupe longitudinale, à plus grande échelle, d'une variante du système d'articulation intégré conforme à l'invention;

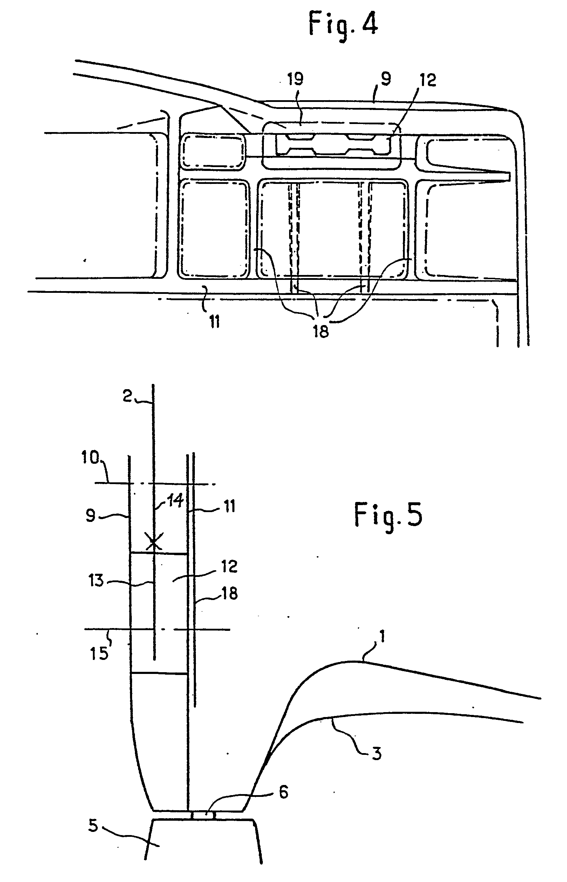

— la figure 4 est une vue de détail en plan plus grande échelle du logement qui constitue l'un des éléments du système d'articulation intégré conforme à l'invention;

— la figure 5 est une vue analogue à celle de la figure 3, représentant une autre variante du système d'articulation intégré conforme à l'invention, et

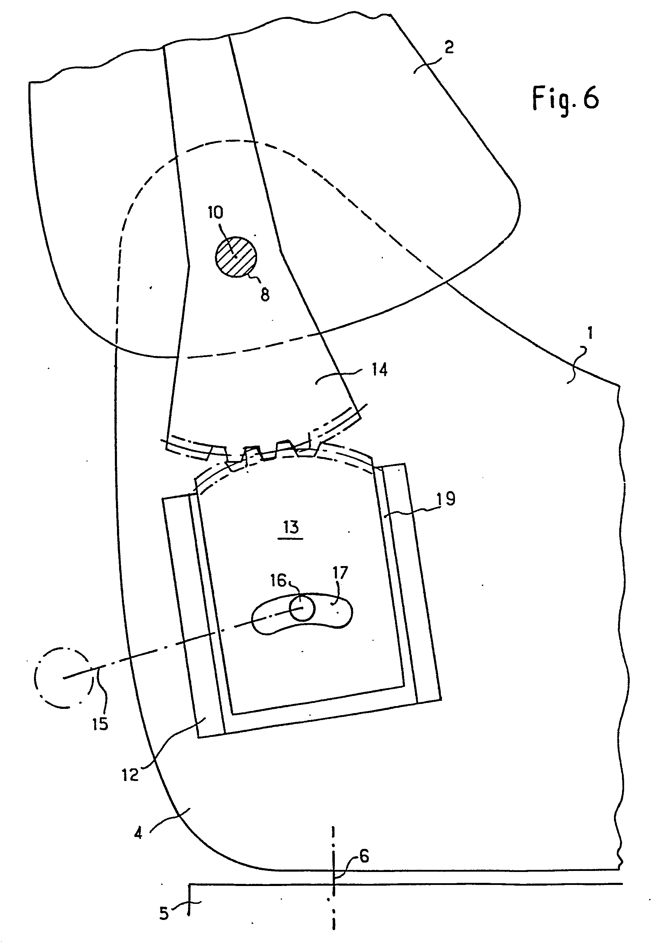

— la figure 6 est une vue de détail, très agrandie par rapport aux représentations des figures 3 et 5 du système d'articulation intégré conforme à l'invention.

Il doit être bien entendu, toutefois, que ces dessins et les parties descriptives correspondantes, sont donnés uniquement à titre d'illustration de l'objet de l'invention dont ils ne constituent en aucune manière une limitation.

Le siège conforme à la présente invention comprend deux parties, à savoir une assise 1 et un dossier 2, reliées entre elles par un système d'articulation et de blocage qui sera décrit plus loin et qui permet au dossier 2 d'effectuer un mouvement de débattement par rapport à l'assise 1.

L'assise 1 est réalisée par moulage par injection, en une matière thermoplastique appropriée, notamment en une matière thermoplastique renforcée par des fibres de verre et plus particulièrement encore, en polyester ou en polypropylene éventuellement renforcé par des fibres de verre, le choix du matériau étant essentiellement dicté par ses qualités de ténacité, de résistance au choc et de résistance à la fatigue.

Le dossier 2 peut être réalisé par toutes techniques appropriées connues, mais il est préféré de le réaliser également par moulage par injection.

La coque du siège, qu'il s'agisse de l'assise ou du dossier, est constituée par une voûte mince, éventuellement renforcée par un réseau de nervures, telles que les nervures 3 par exemple, et pouvant être localement évidée pour la fixation du coussin, ou simplement pour permettre un gain de poids en réduisant la quantité de matière utilisée. L'utilisation de la technique du moulage par injection de matières thermoplastiques permet de réaliser des formes complexes qui allient une tenue mécanique élevée du siège à l'égard des efforts qui lui sont imposés, à un aspect esthétique pouvant être diversifié dans des limites très étendues.

L'assise 1 est solidaire par sa face de dessous, d'au moins une poutre rigide en forme de caisson 4, venue de moulage avec l'assise 1, qui a pour rôle de conférer au siège la rigidité voulue et de contribuer également à la rigidité de la fixation de l'assise à la structure du véhicule.

L'assise 1 est fixée à deux glissières 5 montées sur le plancher du véhicule (non représenté), qui permettent le réglage de la position générale du siège par coulissement. Sa fixation aux glissières 5 est réalisée de façon très simple à l'aide, par exemple, de boulons 6 avantageusement associés à des rondelles ou à une contreplaque métallique 7 pour assurer une bonne répartition des contraintes le long de la coque de l'assise 1.

Pour améliorer encore, en cas de besoin, la rigidité des poutres-caissons 4 et, par suite, de l'assise 1, on peut intégrer au moulage une armature de renfort (non représentée), métallique par exemple, solidarisée mécaniquement par noyage dans la matière thermoplastique, ou chimiquement par collage, ou bien une telle armature solidarisée à la coque d'assise 1 peut remplacer les poutres-caissons.

Un orifice 8 est ménagé dans chacune des parois latérales 9 de l'assise l, à l'arrière de celle-ci, pour recevoir un axe d'articulation 10 solidaire du dossier 2. De façon avantageuse, les axes d'articulation 10 sont venus de moulage avec le dossier 2.

La zone d'articulation, et plus particulièrement les parois latérales 9 au voisinage de l'orifice 8 et du système d'articulation qui sera décrit plus loin, présentent une épaisseur localement accrue pour compenser la flexibilité naturelle de la matière thermoplastique, même chargée de fibres de verre. Toutefois, comme l'épaisseur des parois latérales 9 ne peut être augmentée que dans des limites étroites, en raison de l'existence de problèmes d'hétérogénéité des matériaux et de problèmes de résistance mécanique en résultant, au-delà de ces limites, il s'est avéré avantageux, conformément à l'invention, de pourvoir l'assise 1 d'une deuxième paroi latérale 11, au moins partielle, de support de l'axe d'articulation 10, laquelle paroi 11 est interne par rapport à la paroi 9 et est située à un intervalle de cette dernière. Une telle paroi 11 supplémentaire de support de l'axe d'articulation 10 augmente la rigidité sans requérir une augmentation inacceptable des épaisseurs des parois, et a pour avantage d'assurer la répartition des efforts dans deux zones de l'assise au lieu d'une. Une telle rigidification pèut également être obtenue par d'autres moyens tels que nervurations, renforts locaux constitués par des bossages créés sur la paroi latérale de l'assise, etc ..., ces moyens pouvant se substituer à la deuxième paroi ou être associés à cette dernière.

Un logement, désigné globalement par la référence 12, est ménagé par moulage dans la paroi latérale 9 de l'assise 1 ou, dans le cas de l'existence d'une deuxième paroi 11 de support de l'axe d'articulation, entre les parois 9 et 11. Ce logement 12 reçoit un grain 13 qu'il a pour rôle de bloquer dans sa position de service. Le grain 13 s'engrène sur la base du dossier 2, et plus particulièrement avec un secteur denté 14 solidaire de la base du dossier, pour bloquer le dossier en position réglable : le grain 13 est réalisé en métal ou en matière thermoplastique, selon la matière utilisée pour réaliser le dossier et en fonction du seuil de résistance ou de déformation permanente que l'on désire conférer au dossier. Le grain 13 est réalisé indépendamment du moulage de l'assise 1 et du dossier 2. Le grain est constitué par une pièce mobile dont le déplacement à l'intérieur du logement 12 est commandé par actionnement d'un dispositif de commande approprié tel qu'un levier de commande manuelle 15, entraînant le grain 13 par l'intermédiaire d'un axe 16 dont le déplacement est limité par la lumière incurvée 17 ménagée sur l'une des parois du logement 12, afin de libérer ou bloquer le secteur denté 14 et donc le débattement du dossier 2 par rapport à l'assise. Le levier de commande manuelle pourrait avantageusement être remplacé par tout autre dispositif de commande approprié tel que dispositif à servo-commande électrique, par exemple. Le logement 12 empêche tout débattement latéral qui pourrait faire apparaître un jeu préjudiciable à la fonction du siège.

Comme le logement 12 a également pour rôle de transmettre à l'assise 1 des efforts transmis par le grain 13, il est nécessaire de renforcer le logement par des nervures 18 et/ou

par des renforts (non représentés) avantageusement constitués par des inserts noyés en métal ou en matière plastique, pour éviter que l'apparition de couples de torsion dans le logement par suite de la transmission d'efforts par le grain vers la paroi latérale 9 de l'assise, n'entraîne de surcontraintes génératrices de ruptures dans le cas de charges élevées. De plus, pour répartir les efforts de poinçonnement causés par le grain 13 sur les parois internes du logement 12, qui peuvent provoquer, en particulier, des phénomènes de fluage, il s'est avéré avantageux de renforcer la paroi intérieure du logement 12 par une chemise 19 en une matière présentant une résistance mécanique et une élasticité élevées tel qu'un polyamide éventuellement chargé de fibres de verre broyées ou coupées à haute résistance, par exemple; une telle chemise de protection 19 peut être insérée dans le logement 12 après moulage de l'assise, ou bien être intégrée directement au moulage, par surmoulage.

Le secteur denté 14 solidaire de la base du dossier 2 est avantageusement venu de moulage avec ledit dossier 2, ou bien il peut être constitué par une pièce en métal ou en matière thermoplastique appropriée rapportée à la base du dossier 2, après moulage ou fabrication de ce dernier par tous moyens appropriés.

L'on obtient ainsi un système d'articulation intégré à l'assise du siège, venu de moulage avec ce dernier, qui n'est pas visible de l'extérieur et qui est suffisamment renforcé pour résister aux efforts entraînés par le blocage du dossier sur l'assise, aux efforts résultant de l'appui du corps sur le dossier, ainsi qu'aux efforts dus au réglage du dossier et aux efforts calculés conformément aux normes automobiles de tenus en cas d'accident. Le système d'articulation intégré conforme à la présente invention est robuste, ne requiert pas d'opérations de montage longues, coûteuses et consommatrices de main-d'oeuvre et est d'un fonctionnement sûr.

Le siège en matière thermoplastique moulé par injection, à système d'articulation intégré, conforme à la présente invention, constitue un siège confortable, d'une grande légèreté, dont le prix de revient est réduit par rapport à celui des sièges proposés dans l'Art antérieur, ce d'autant plus que sa conception permet la suppression de certains habillages, notamment dans la zone d'articulation, et la suppression des moyens de support des coussins de garniture des sièges; en outre l'aspect esthétique des sièges conformes à l'invention est très diversifié et la fonction de réglage de la position du dossier permet de placer ce dernier dans n'importe quelle position souhaitée, jusqu'au rabattement complet pour l'usage du siège en couchette. De plus, la conception du siège conforme à la présente invention permet sa solidarisation directe, par des moyens simples, à la structure du véhicule, et plus particulièrement, au plancher de ce dernier.

Ainsi que cela ressort de ce qui précède, l'invention ne se limite nullement à ceux de ses modes de réalisation et d'application qui viennent d'être décrits de façon plus explicite; elle comprend en particulier la variante et l'inversion mécanique selon laquelle le système d'articulation intégré comporte un logement pour le grain moulé dans le dossier et un secteur denté solidaire de l'assise.

## Revendications

1. Siège à dossier articulé, notamment pour automobiles, comprenant une assise (1) en matière thermoplastique moulée par injection, un dossier (2) pourvu d'au moins un axe d'articulation (10) à l'assise (1) monté dans les parois latérales (9) de la partie arrière de l'assise et un système d'articulation qui comprend un secteur denté (14) qui s'engrène avec un grain débrayable (13) pour bloquer le dossier réglable en position, des moyens de fixation (6, 7) dudit siège à la structure du véhicule étant également prévus, lequel siège est caractérisé en ce que ledit système d'articulation, intégré à l'assise (1) est complètement dissimulé vis-à-vis de l'extérieur, ladite assise (1) comportant à sa partie arrière des parois latérales (9, 11) surélevées par rapport au reste de l'assise (1), qui enveloppent complètement la base du dossier (2) ainsi que le secteur denté (14) solidaire de la dite base du dossier, en ce que le grain débrayable (13) qui est logé dans un logement (12) venu de moulage, ménagé par insulage dans une paroi latèrale de l'assise (1) et en ce que l'axe d'articulation (10) est reçu dans des orifices (8) ménagés par moulage dans au moins l'une desdites parois latérales (9, 11).

2. Siège selon la revendication 1, caractérisé en ce que le logement (12) du grain (13) est pourvu de nervures (18) et/ou de renforts aptes à s'opposer aux couples de torsion susceptibles d'apparaître sur la paroi interne du logement lorsque le grain transmet un effort sur la paroi interne du côté du siège.

3. Siège selon l'une quelconque des revendications 1 et 2, caractérisé en ce que la paroi interne (9) du logement (12) du grain (13) est renforcée par une chemise (19) en matériau présentant des propriétés de résistance et d'élasticité élevées, qui peut être insérée dans le logement (12) après moulage de l'assise (1) ou être intégrée au moulage par surmoulage.

4. Siége selon l'une quelconque des revendications 1 à 3, caractérisé en ce que le secteur denté (14) solidaire du dossier (2) est en matière thermoplastique et est venu de moulage avec le dossier.

5. Siège selon l'une quelconque des revendications 1 à 4, caractérisé en ce qu'il comprend des moyens de rigidifications par l'intermédiaire desquels il est fixé à la structure du véhicule, lesquels moyens sont venus de moulage avec l'assise (1) et sont constitués par au moins un caisson (4) rigide qui accrôt l'inertie mécanique de l'assise et est fixé, notamment à l'aide de boulons (6), sur deux glissières (5) montées sur le plancher du véhicule, qui permettent le réglage de la position générale du siège par coulissement.

6. Siège selon l'une quelconque des revendications 1 à 5, caractérisé en ce que lesdits moyens de rigidification sont constitués par une armatuer rigide de renfort, en particulier métallique, intégrée au moulage, rendue solidaire de l'assise.

7. Siège selon la revendication 1, caractérisé en ce que la paroi latérale arrière (9) de l'assise est unique et renforcée par des nervures (18) et/ou par d'autres moyens de renfort tels que des inserts noyés au des bossages.

8. Siège selon la revendication 1, caractérisé en ce que le grain (13) est entrainé par un dispositif à servocommande.

## Patentansprüche

1. Sitz mit verstellbarer Rückenlehne, insbesondere für Kraftfahrzeuge, mit einem Sitzteil (1) aus einem formgespritzten, thermoplastischen Material, eine Rückenlehne (2), die wenigstens eine Bewegungsachse (10) an dem Sitzteil (1) aufweist, die an den Seitenwänden (9) des hinteren Teils des Sitzteiles angeordnet ist, und einer Bewegungseinrichtung, die einen gezahnten Sektor (14) beinhaltet, der in einen auskuppelbaren Riegel (13) zum Blockieren der in seiner Lage einstellbaren Rückenlehne eingreift, wobei Befestigungsmittel (6, 7) des Sitzes an dem Aufbau des Fahrzeuges ebenfalls vorgesehen sind, dadurch gekennzeichnet, daß die an dem Sitzteil (1) integrierte Bewegungseinrichtung gegenüber außen vollständig verboren ist wobei das Sitzteil (1) an ihrem hinteren Teil Seitenwände (9, 11) beinhaltet, die bezüglich des übrigen Sitzteiles (1) überhöht sind und die Basis der Rückenlehne (2) vollständig umkleiden ebenso wie den gezahnten Sektor (14) gemeinsam zusammen mit der Basis der Rückenlehne, daß der auskuppelbare Riegel (13), der in einer von der Formung herrührenden Aufnahme (12) untergebracht ist, die durch Formung in einer Seitenwand des Sitzteiles (1) geschaffen ist, und daß die Bewegungsachse (10) in Öffnungen (8) aufgenommen ist, die durch Formung in wenigstens einer Seitenwand (9, 11) geschaffen sind.

2. Sitz nach Anspruch 1, dadurch gekennzeichnet, daß die Aufnahme (12) des Riegels (13) mit Rippen (18) und/oder Verstärkungen ausgerüstet ist, die geeignet sind, sich den Torsionsmomenten entgegenzustellen, die in der Lage sind, auf der Innenwand der Aufnahme aufzutreten, wenn der Riegel eine Beanspruchung auf die Innenwand der Seite des Sitzes überträgt.

3. Sitz nach einem der Ansprüche 1 oder 2, dadurch gekennzeichnet, daß die die Innenwand (9) der Aufnahme (12) des Riegels (13) von einem Mantel (19) aus einem Material verstärkt ist, das Eigenschaften erhöhter Widerstandskraft und Elastizität bietet, der in die Aufnahme (12) nach Formung des Sitzteiles (1) eingesetzt werden kann oder zu der Formung durch Über-' formung integriert werden kann.

4. Sitz nach einem der Ansprüche 1 bis 3, dadurch gekennzeichnet, daß der gezahnte Sektor (14) zusammen mit der Rückenlehne (2) aus thermoplastischem Material ist und aus der Formung mit der Rückenlehne hervorgegangen ist.

5. Sitz nach irgendeinem der Ansprüche 1 bis 4, dadurch gekennzeichnet, daß er Versteifungsmittel beinhaltet, durch deren Vermittlung er an dem Aufbau des Fahrzeuges befestigt ist, welche Mittel aus der Formung mit dem Sitzteil (1) herrühren und von wenigstens einem steifen Kasten (4) gebildet werden, der die mechanische Trägheit des Sitzes erhöht und, insbesondere mit Hilfe von Bolzen (6), auf zwei Gleitschienen (5) befestigt ist, die auf dem Boden des Fahrzeuges angeordnet sind und die Einstellung der allgemeinen Position des Sitzes durch Verschieben erlauben.

6. Sitz nach irgendeinem der Ansprüche 1 bis 5, dadurch gekennzeichnet, daß die Versteifungsmittel von einem steifen Verstärkungsrahmen gebildet werden, insbesondere einem metallischen, der bei der Formung integriert, mit dem Sitz vereint ist.

7. Sitz nach Anspruch 1, dadurch gekennzeichnet, daß die Seitenwand (9) hinter dem Spitzteil einzig und von Rippen (18) und/oder anderen Verstärkungsmitteln, wie versenkte Einsetzungen oder Vorsprünge verstärkt ist.

8. Sitz nach Anspruch 1, dadurch gekennzeichnet, daß der Riegel (13) von einer Servosteuerung angetrieben ist.

**Claims**

1. Seat with an articulated seat back, particularly for automobiles, comprising a seat (1) of thermoplastic material moulded by injection, a seat back (2) provided with at least one pivoting axle (10) on the seat (1) mounted in the side walls (9) of the rear portion of the seat and a pivoting system which comprises a toothed sector (14) which engages with a declutchable cam roll (13) to block the adjustable seat back in position, means for fixing (6, 7) said seat to the structure of the vehicle being also provided, which seat is characterised in that said pivoting system, integrated with the seat (1) is completely concealed with the respect to the outside, said seat (1) comprising at its rear portion side walls (9, 11) raised with respect to the rest of the seat (1), which completely envelope the base of the seat back (2) as well as the toothed sector (14) fastened to said base of the seat back, in that the declutchable cam roll (13) which is housed in a housing (12) formed from moulding, arranged by moulding in a side wall of the seat (1) and in that the articulation axle (10) is received in orifices (8) formed by moulding in at least one of said side walls (8, 11).

2. Seat according to claim 1, characterised in that the housing (12) of the cam (13) is provided with ribs (18) and/or reinforcements adapted to oppose the twisting torques which can appear on the inner wall of the housing when the cam transmits a force to the inner wall of the side of the seat.

3. Seat according to any one of claims 1 and 2, characterised in that the inner wall (9) of the housing (12) or of the cam (13) is reinforced by a jacket (19) of material having high-strength and elasticity properties, which can be inserted in the housing (12) after moulding of the seat (1) or be integrated on moulding by over-moulding.

4. Seat according to any one of claims 1 to 3, characterised in that the toothed sector (14) fast to the seat back (2) of thermoplastic material and is formed by moulding with the seat back.

5. Seat according to any one of claims 1 to 4, characterised in that it comprises rigidification means by which is is fixed to the structure of the vehicle, which means are formed by moulding with the seat (1) and are constituted by at least one rigid box (4) which increases the mechanical inertia of the seat and is fixed, particularly by means of bolts (6), to two slides (5) mounted on the floor of the vehicle, which permit the adjustment of the general position of the seat by sliding.

6. Seat according to any one of claims 1 to 5, characterised in that said rigidification means are constituted by a rigid reinforcing core, in particular metallic, integrated on moulding, rendering fast to the seat.

7. Seat according to claim 1, characterised in that the rear side wall (9) of the seat is single and reinforced by ribs (18) and/or by other reinforcement means such as inserts or bosses.

8. Seat according to claim 1, characterised in that the cam (13) is driven by a servo-control device.

Fig. 1

2

10    10    9

9    1    4    12

15

3

Fig. 2

2

10    8

9    12    1    3

15

4    5

2

10

14

9

12

13

15

Fig. 3

1

6

7    3

5

1

# Fig. 4

# Fig. 5

Fig. 6